# EUROPÄISCHE PATENTSCHRIFT

(11) **EP 2 930 386 B1**
(45) Veröffentlichungstag und Bekanntmachung des Hinweises auf die Patenterteilung: **19.06.2019**
(21) Anmeldenummer: 15000838.1
(22) Anmeldetag: 21.03.2015
(51) Int. Cl.: F16D 3/58, B61D 43/00, F16D 3/74, F16D 3/76, F16D 9/06

(54) **RADACHSE-GENERATOR-KUPPLUNG ZUM VERBINDEN EINER MIT EINER RADACHSE EINES SCHIENENFAHRZEUGS WIRKVERBUNDENEN KARDANWELLE MIT EINER GENERATORWELLE EINES AM SCHIENENFAHRZEUG GEHALTENEN STROMGENERATORS**
WHEEL AXIS GENERATOR COUPLING FOR CONNECTING A CARDAN SHAFT IN A FUNCTIONAL MANNER WITH A WHEEL AXLE OF A RAIL VEHICLE WITH A GENERATOR SHAFT OF A POWER GENERATOR FIXED TO THE RAIL VEHICLE
COUPLAGE GÉNÉRATEUR ESSIEU DESTINÉ À RELIER UN ARBRE DE CARDAN EN LIAISON ACTIVE AVEC UN ESSIEU DE VÉHICULE SUR RAIL À L'AIDE D'UN ARBRE DE GÉNÉRATEUR D'UN GÉNÉRATEUR DE COURANT MAINTENU SUR LE VÉHICULE SUR RAIL

(30) Priorität: 08.04.2014 DE 102014005236
(43) Veröffentlichungstag der Anmeldung: 14.10.2015
(73) Patentinhaber: TS Henschel GmbH, 52070 Aachen (DE)
(72) Erfinder: Volbers, Thomas, D-59494 Soest (DE); Henke, Matthias, D-34121 Kassel (DE)
(74) Vertreter: Patentanwälte Walther Hinz Bayer PartGmbB

(56) Entgegenhaltungen:
- EP-A1- 2 085 631
- DD-A1- 141 189
- DE-A1- 3 606 318
- KR-B1- 100 821 862
- US-A- 2 969 661
- US-A- 3 855 818
- US-A- 4 389 202

## Beschreibung

Die vorliegende Erfindung betrifft eine Radachse-Generator-Kupplung eines Schienenfahrzeuges zum Verbinden einer mit einer Radachse des Schienenfahrzeuges verbundenen Kardanwelle mit einer Generatorwelle eines am Schienenfahrzeug gehaltenen Stromgenerators gemäß dem Oberbegriff des Anspruches 1.

Bei gezogenen Schienenfahrzeugen ohne eigenen Antrieb, insbesondere zur Personenbeförderung, wird der im Schienenfahrzeug benötigte Strom durch einen am Schienenfahrzeug angebrachten Generator erzeugt.

Dieser Generator ist über eine Kardanwelle, ggfs. unter Verwendung eines Übersetzungsgetriebes, mit einer Radachse des Schienenfahrzeuges verbunden, sodass über die Rotation der Radachse der Generator angetrieben wird und entsprechend Strom produziert. Bei Schienenfahrzeugen kommt es vor, dass beim Übergang zwischen zwei Gleisstücken oder Weichen oder bei anderen Bodenwellen die gesamte Radachse und damit die Kardanwelle und damit auch die Generatorwelle einem unerwünschten Stoß ausgesetzt wird, welcher den Generator nachhaltig beschädigen kann. Zur Abdämpfung derartiger Stöße ist es bekannt, dass zwischen der Kardanwelle und der Generatorwelle eine Kupplung mit einem gummielastischen Dämpfungselement vorzusehen ist, über welche die Stöße abgefedert werden.

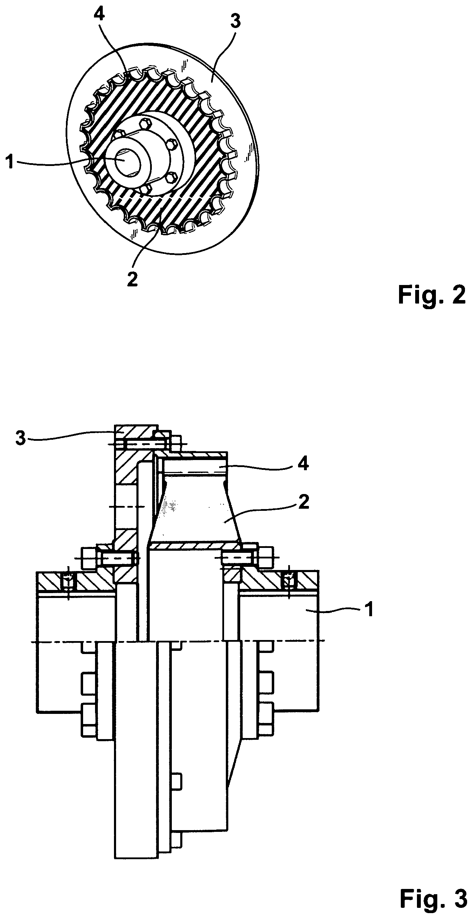

In den Fig. 2 und 3 der Zeichnung ist eine bekannte Ausführungsform einer solchen Radachse-Generator-Kupplung dargestellt. Die Kupplung umfasst einen kleinen Flansch (1) zur Aufnahme der Kardanwelle, welcher von einem gummielastischen Dämpfungselement (2) umgeben ist. Dieses Dämpfungselement (2) ist wiederum von einem großen Flansch (3) umgeben, welcher an der Generatorwelle angebracht werden kann. In der in den Figuren 2 und 3 dargestellten Ausführungsform ist das Dämpfungselement über seinen äußeren Umfang verteilt mit einer Anzahl von Vorsprüngen (4) ausgestattet, während der große Flansch mit entsprechenden Aussparungen ausgestattet ist, sodass das Dämpfungselement passgenau im großen Flansch gehalten ist. Dabei erfolgt die Kraftübertragung im Regelfall über den großen Flansch (3) und die Aussparung/Vorsprünge (4) auf das Dämpfungselement (2) und weiter auf den kleinen Flansch (1) und die Kardanwelle. Dabei sind die Vorsprünge (4) derart ausgelegt, dass die üblicherweise hier auftretenden Kräfte dauerhaft übertragen werden können.

Bei bestimmten Umweltbedingungen oder Fahrzuständen kommt es vor, dass der Generator während der Fahrt blockiert. Dadurch wird die Kardanwelle und somit die Radachse und das Rad des Schienenfahrzeuges durch den starren Antriebsstrang ebenfalls blockiert mit der Folge, dass die Räder über die Schiene gezogen werden. Dabei entstehen Schäden an Rad und Schiene und außerdem kann die entstehende Reibungswärme zu weiteren erheblichen Beschädigungen des Schienenfahrzeuges oder des Schienenstranges führen. Um derartige Beschädigungen des Schienenfahrzeuges und/oder des Schienenstranges zu vermeiden, sind am Dämpfungselement der in den Figuren 2 und 3 dargestellten Ausführungsform einzelnen Vorsprünge vorgesehen, die sich verbiegen lassen. Wenn also der Generator blockiert, greifen derart hohe Kräfte an die Vorsprünge des Dämpfungselementes an, sodass diese zunächst zur Seite gedrückt werden und das Dämpfungselement insgesamt einen oder mehrere Vorsprünge bzw. Zähne weiterrutscht. Hält dieser Zustand an, so kann es auch passieren, dass sich die einzelnen Vorsprünge/Zähne abnutzen oder gar abbrechen. Statt des Rades rutscht also die Kupplung durch, sodass die beschriebenen Beschädigungen am Schienenstrang und am Fahrzeug vermieden werden. Die in den Figuren 2 und 3 beschriebene Kupplung ist z. B. bei der Firma Siemens AG unter der Bestellnummer E 86060-K5710-A111-A5 erhältlich.

Aus der US 4,389,202 ist eine Radachse-Generator-Kupplung bekannt ist, deren Antriebsflansch einen Innenflansch und einen Außenflansch aufweist, wobei zwischen dem Innenflansch und dem Außenflansch eine Anzahl von Scherstiften mit einer Sollbruchstelle vorgesehen sind, wobei die Scherstifte koaxial zur Antriebs- bzw. Abtriebswelle angeordnet sind.

Nachdem also ein solcher Zwischenfall aufgetreten ist, muss das Schienenfahrzeug in eine entsprechende Werkstatt gebracht werden, um die Kupplung auszubauen und das Dämpfungselement auszutauschen. Hierbei entstehen hohe Transport-, Material- und Montagekosten. Auch kann das Schienenfahrzeug während dieser Zeit nicht genutzt werden.

Davon ausgehend liegt der vorliegenden Erfindung die Aufgabe zugrunde, eine Radachse-Generator-Kupplung der eingangs genannten Art zu schaffen, deren Wiederherstellung schnell, einfach und mit geringem Materialaufwand erreicht wird.

Als technische Lösung dieser Aufgabe wird erfindungsgemäß eine Radachse-Generator-Kupplung mit den Merkmalen des Anspruches 1 vorgeschlagen. Vorteilhafte Weiterbildungen dieser Kupplung sind den jeweiligen Unteransprüchen zu entnehmen.

Eine nach dieser technischen Lehre ausgebildete Radachse-Generator-Kupplung hat den Vorteil, dass die rotierbare Anordnung des Innenflansches gegenüber dem Dämpfungselement und/oder dem Antriebsflansch und die Trennung von Innenflansch und Außenflansch bewirkt, dass ohne das Vorhandensein eines intakten Brechelementes der Kraftfluss zwischen der Kardanwelle und der Generatorwelle unterbrochen ist und die Wellen unabhängig voneinander rotieren können. Das bedeutet, dass aufgrund der rotierbaren Anordnung des Innenflansches gegenüber dem Dämpfungselement und/oder gegenüber dem Antriebsflansch hier keine Kraft übertragen wird, sodass im Falle der Blockade der Generatorwelle die Kardanwelle dennoch weiter rotieren kann, ohne dass eine erhöhte Reibung und damit eine erhöhte Wärmeentwicklung entsteht.

Befindet sich zwischen dem Innenflansch und dem Außenflansch ein unzerbrochenes Brechelement, so findet die Kraftübertragung von der Kardanwelle auf die Generatorwelle über dieses Brechelement statt, sodass der Generator an sich üblicher Weise Strom erzeugen kann. Sollte an irgendeiner Stelle eine Komplikation auftreten, insbesondere falls die Generatorwelle einmal blockiert, so greifen an dem Brechelement ungewöhnlich hohe Kräfte an und dieses bricht entzwei, mit der Folge, dass die Kraftübertragung unterbrochen ist und die Kardanwelle gegenüber der Generatorwelle rotieren kann, ohne dass eine nennenswerte Reibung entsteht und ohne dass nennenswerte Reibungswärme entsteht.

Ein weiterer signifikanter Vorteil der erfindungsgemäßen Radachse-Generator-Kupplung besteht darin, dass das einmal zerstörte Brechelement in einfacher Weise durch ein intaktes Brechelement ersetzt werden kann. So ist es noch nicht einmal erforderlich, die Kupplung auszubauen, um das Brechelement zu wechseln, sodass der Einbau neuer Brechelemente schnell und kostengünstig erfolgen kann. Darüber hinaus ist ein solches Brechelement ein vergleichsweise kleines und billiges Bauteil, sodass hier nur geringe Materialkosten entstehen. Auch ist es möglich das Brechelement vor Ort zu ersetzten, sodass das Schienenfahrzeug nicht erst in eine Werkstatt gebracht werden muss.

Es versteht sich, dass der erfindungsgemäße Aufbau der Radachse-Generator-Kupplung alternativ zum Abtriebsflansch auch am Antriebsflansch in analoger Weise erfolgen kann, wobei auch in diesem Fall die oben genannten Vorteile eintreten.

Dabei hat es sich als vorteilhaft erwiesen, das Brechelement formschlüssig mit dem Außenflansch und dem Innenflansch zu verbinden, weil hierdurch ein einfacher und schneller Aus- bzw. Einbau erfolgen kann.

Die radiale Anordnung der Brechelemente hat den Vorteil, dass der Ein- bzw. Ausbau eines solchen Brechelementes von außerhalb der Kupplung in einfacher Weise erfolgen kann, ohne dass die Kupplung selber ausgebaut oder demontiert werden muss. Hierdurch wird beim Austausch der Brechelemente sehr viel Zeit gespart. Auch ist es hierdurch möglich, den Austausch der Brechelemente vor Ort durchzuführen, sodass der teure Transport des Schienenfahrzeuges durch eine entsprechende Werkstatt entbehrlich ist.

Die innen hohl ausgebildete Brechelemente erhöht die Scherfestigkeit des Brechelementes und reduziert gleichzeitig den erforderlichen Materialaufwand.

In einer bevorzugten Ausführungsform ist zwischen dem Antriebsflansch und dem Innenflansch, bzw. zwischen dem Abtriebflansch und dem Innenflansch, mindestens ein Wälzlager, insbesondere ein Kugellager, vorgesehen. Durch dieses Wälzlager wird eine definierte Führung zwischen dem Antriebsflansch/Abtriebsflansch einerseits und dem Innenflansch andererseits erreicht und gleichzeitig erfolgt eine reibungsarme relative Bewegung zwischen beiden. Hieraus ergibt sich eine kontrollierte Führung der Kardanwelle gegenüber der Generatorwelle und es wird neben der aus dem Stand der Technik bekannten Wärmeentwicklung auch eine Beschädigung einzelner Bauteile vermieden.

In einer bevorzugten Weiterbildung ist das mindestens eine Wälzlager mittels einer Feder, insbesondere einer Tellerfeder, vorgespannt. Während des standardmäßigen Betriebs der Radachse-Generator-Kupplung wird die Kraft über das Brechelement übertragen und es findet keine Relativrotation zwischen der Kardanwelle und der Generatorwelle statt. Dies hat zur Folge, dass am Wälzlager keine oder nur geringe Kräfte anliegen, mit der Gefahr, dass die einzelnen Bauteile des Wälzlagers gegeneinanderschlagen und/oder nicht ausreichend gefettet werden, was zu Beschädigungen des Wälzlagers führen kann. Um dies zu vermeiden, hat es sich als vorteilhaft erwiesen, die Wälzlager mittels einer Feder, insbesondere einer Tellerfeder, zu spannen.

In einer anderen, bevorzugten Ausführungsform weist das Brechelement eine definierte Sollbruchstelle auf. Dies kann bei einem beispielsweise zylindrischen Brechelement eine Verjüngung im Durchmesser des Zylinders ein. Dabei hat es sich als vorteilhaft erwiesen, diese Sollbruchstelle in einem Bereich zwischen dem Innen- und dem Außenflansch anzuordnen. Dies hat den Vorteil, dass das Brechelement kontrolliert in einem Bereich zwischen dem Innen- und dem Außenflansch bricht mit der Folge, dass ein Verklemmen eines Teiles des Brechelementes zwischen dem Innen- und dem Außenflansch vermieden wird.

In noch einer anderen, bevorzugten Ausführungsform ist am äußeren Rand des Brechelementes ein Anschlag, vorzugsweise ein umlaufender Kragen, ausgebildet. Hierdurch wird es möglich, dass Brechelement exakt und in vorbestimmter Weise ausreichend weit in die Kupplung einzuschieben, um eine ordnungsgemäße Montage sicher zu stellen. Sofern das Brechelement eine Sollbruchstelle aufweist, wird hierdurch sichergestellt, dass die Sollbruchstelle auch tatsächlich im Bereich zwischen dem Innenflansch und dem Außenflansch vorliegt.

In einer vorteilhaften Weiterbildung ist am Brechelement am radial äußeren Ende ein äußeres Innengewinde und/oder am radial inneren Ende ein inneres Innengewinde vorgesehen. Diese Innengewinde erleichtern den Ein- oder Ausbau des Brechelementes bzw. der beiden Teile eines Brechelementes, sodass hier weitere Kosten gespart werden können.

In einer bevorzugten Weiterbildung weist das äußere Innengewinde einen größeren Durchmesser auf, als das innere Innengewinde. Dies hat den Vorteil, dass der Einbau bzw. Ausbau des Brechelementes weiter vereinfacht wird.

Weitere Vorteile der erfindungsgemäßen Radachse-Generator-Kupplung ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: zeigt einen Teil eines Schienenfahrzeuges in Seitenansicht in schematisierter Darstellung mit einer erfindungsgemäßen Radachse-Generator-Kupplung;
- Fig. 2: zeigt eine aus dem Stand der Technik bekannte Radachse-Generator-Kupplung in perspektivischer Ansicht;
- Fig. 3: zeigt eine teilweise geschnittene dargestellte Seitenansicht der Radachse-Generator-Kupplung gemäß Fig. 2;
- Fig. 4: zeigt eine geschnitten dargestellte Seitenansicht einer erfindungsgemäßen Radachse-Generator-Kupplung;
- Fig. 5: zeigt eine Detailvergrößerung gemäß Linie V-V in Fig. 4.

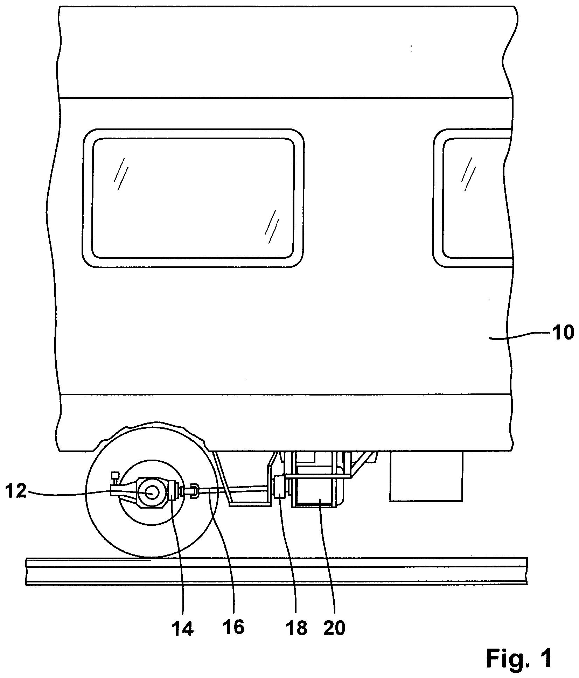

Fig. 1 zeigt ein Schienenfahrzeug, hier einen Eisenbahnwaggon zur Personenbeförderung 10 mit einer Radachse 12, einem daran angebrachten Übersetzungsgetriebe 14, an dem eine Kardanwelle 16 angeschlossen ist, eine Radachse-Generator-Kupplung 18, sowie einen Generator 20 zur Stromerzeugung für den Waggon 10. An der Kupplung 18 ist antriebsseitig die Kardanwelle 16 angebracht, während abtriebsseitig eine hier nicht näher zu erkennende Generatorwelle des Generators 20 angreift.

Fig. 2 und 3 zeigen eine Radachse-Generator-Kupplung der Firma Siemens AG, die antriebsseitig einen kleinen Flansch zur Aufnahme einer Kardanwelle aufweist, welcher mit einem elastischen Dämpfungselement 2 verbunden ist. An das Dämpfungselement 2 schließt sich dann ein großer Flansch 3 an, an dem abtriebsseitig die Generatorwelle montiert wird. Das elastische Dämpfungselement 2 weist über den Umfang verteilt, eine Anzahl von Vorsprüngen 4 auf, die in entsprechende Aussparungen am großen Flansch 3 eingreifen. Dieses Dämpfungselement 2 fängt von der Radachse her ausgehend kleinere Stöße auf, um Beschädigungen am Generator zu vermeiden. Sollte es jedoch vorkommen, dass der Generator blockiert, so werden die Vorsprünge 4 aufgrund der auftretenden Kräfte zur Seite gebogen oder abgeschert mit der Folge, dass die Kupplung durchrutscht und keine Kräfte mehr vom kleinen Flansch 1 auf den großen Flansch 3 übertragen werden können. Allerdings muss nach einem solchen Vorfall das gesamte elastische Dämpfungselement 2 ausgetauscht und gegen ein neues ersetzt werden. Auch können hierbei aufgrund von erhöhter Reibung hohe Temperaturen auftreten, die zu weiteren Beschädigungen führen.

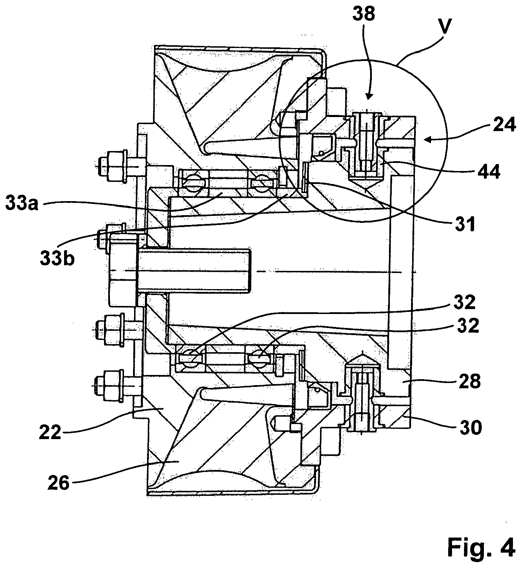

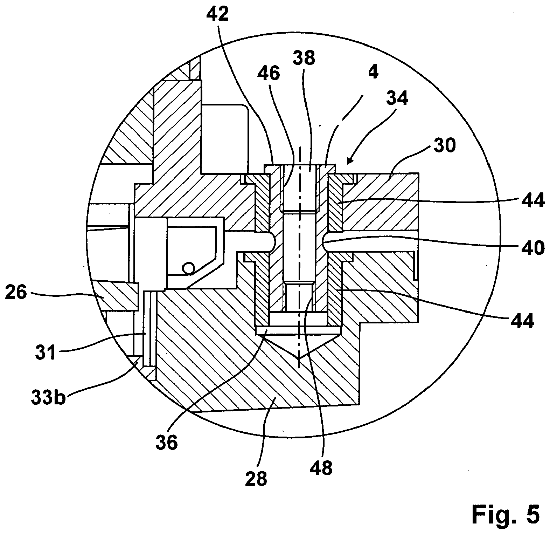

Die Fig. 4 und 5 zeigen eine erste Ausführungsform einer erfindungsgemäßen Radachse-Generator-Kupplung, umfassend einen Antriebsflansch 22 zur Aufnahme einer Kardanwelle 16, einen Abtriebsflansch 24 zur Aufnahme einer Generatorwelle eines Generators 20 und ein zwischen dem Antriebsflansch 22 und dem Abtriebsflansch 24 angeordnetes gummielastisches Dämpfungselement 26.

Der Abtriebsflansch 24 umfasst einen mit der Generatorwelle verbindbaren Innenflansch 28 und einen fest am gummielastischen Dämpfungselement 26 angebrachten Außenflansch 30, wobei der Innenflansch 28 und der Außenflansch 30 derart getrennt voneinander ausgebildet sind, dass diese keinerlei direkte Berührungspunkte haben. Gleichzeitig ist der Innenflansch 28 quasi innerhalb des Außenflansches 30 angeordnet, sodass der Innenflansch 28 innerhalb des Außenflansches 30 rotieren kann.

Der Innenflansch 28 ist mittels zweier Kugellager 32 rotierbar am Antriebsflansch 22 gehalten, wobei die beiden Kugellager 32 derart mittels eines Zwischenstückes 33a beabstandet zueinander angeordnet sind, dass ein Verkanten des Innenflansches 28 gegenüber dem Antriebsflansch 22 verhindert wird.

Das Kugellager 32 ist im Normalfall nicht in Benutzung, so dass entsprechend keine nennenswerten Kräfte auf das Kugellager 32 wirken. Um in dieser Situation ein unkontrolliertes Bewegen der Kugeln innerhalb des Gehäuses des Kugellagers 32 und somit um Beschädigungen des Kugellagers 32 zu vermeiden, ist in der Kupplung 18 eine Tellerfeder 31 vorgesehen, die über eine Distanzstück 33b von Außen auf das Kugellager 32 wirkt und dieses quasi vorspannt, so dass die Kugeln permanent am Gehäuse des Kugellagers 32 zur Anlage kommen. Dabei ist in dieser Ausführungsform die Tellerfeder 31 zwischen dem Distanzstück 33b, bzw. Kugellager 32 und dem Innenflansch 28 verspannt und wirkt in Richtung der Längsachse der Kupplung 18, also seitlich auf das Kugellager 32.

Das zwischen den beiden Kugellagern 32 angeordnete Zwischenstück 33a leitet die von der Tellerfeder 31 ausgehende Kraft vom ersten Kugellager 32 auf das zweite Kugellager 32 weiter, um dieses ebenfalls vorzuspannen.

Im Außenflansch 30 ist eine Öffnung 34 vorgesehen und fluchtend mit der Öffnung 34 ist auf der Außenseite des Innenflansches 28 eine entsprechende Aussparung 36 vorgesehen, sodass ein Brechelement 38 durch die Öffnung 34 hindurch bis in die Aussparung 36 des Innenflansches 28 eingebracht werden kann.

Die von der Kardanwelle 16 ausgehende Kraft wird über den Antriebsflansch 22 und über das gummielastische Dämpfungselement 26 auf den Außenflansch 30 übertragen und weiter über das Brechelement 38 auf den Innenflansch 28 und wird somit auf die Generatorwelle des Generators 20 übertragen, sodass die Stromerzeugung im Generator 20 erfolgen kann. Sollte der Generator 20 einmal blockieren und somit die Generatorwelle sich nicht drehen lassen, so bricht das Brechelement 38 und die Kraftübertragung wird so unterbrochen. Weil aber der Antriebsflansch 22 weiterhin von der Kardanwelle 16 angetrieben wird, dreht sich der Antriebsflansch 22 zusammen mit dem gummielastischen Dämpfungselement 26 und dem Außenflansch 30 weiter, während der Innenflansch 28 stillsteht. In diesem Falle gewährleisten die Kugellager 32, das zwischen dem Innenflansch 28 und den anderen Bauteilen der Kupplung 18 nur geringe Reibungskräfte entstehen, sodass auch keine nennenswerte Reibungswärme anfällt. Weiterhin bewirken die Kugellager 32, dass auch bei einem zerbrochenem Brechelement 38 der Antriebsflansch 22 und der Abtriebsflansch 24 nicht gegeneinander verkanten mit dem Ergebnis, dass keine weiteren Beschädigungen stattfinden.

Nachdem das Problem im Generator 20 dann behoben ist, kann das zerbrochene Brechelement 38 von einem Mechaniker vor Ort entfernt werden und gegen ein intaktes Brechelement 38 ersetzt werden, sodass das Schienenfahrzeug 10 wieder einsatzbereit ist. Dabei ist es nicht notwendig, das Schienenfahrzeug 10 in eine Werkstatt zu bringen, weil diese Arbeiten auch vor Ort ausgeführt werden können.

Das Brechelement 38 ist im Wesentlichen zylindrisch ausgeführt und innen hohl. Etwa in der Mitte ist im Brechelement 38 eine Materialverdünnung vorgesehen, um hier eine Sollbruchstelle 40 zu erreichen.

An einer Seite des Brechelementes 38 ist ein umlaufender, nach außen überstehender Kragen 42 ausgebildet, der als Anschlag beim Einsetzen des Brechelementes 38 in den Außenflansch 30 fungiert. Dabei sind der Kragen 42 und die Sollbruchstelle 40 derart angeordnet, dass im montierten Zustand die Sollbruchstelle 40 genau in einen Spalt zwischen dem Innenflansch 28 und dem Außenflansch 30 gelangt. Hierdurch wird erreicht, dass das Brechelement 38 im Bereich zwischen dem Innenflansch 28 und dem Außenflansch 30 zerbricht, sodass etwaige am Brechelement 38 verbliebene Grate keine oder zumindest keine großen Beschädigungen anrichten können.

In der Öffnung 34 und in der Aussparung 36 ist jeweils eine gehärtete Buchse 44 zur Aufnahme des Brechelementes 38 vorgesehen. Diese gehärtete Buchse ist verschleißärmer als der eigentliche Innenflansch 28 bzw. Außenflansch 30, sodass selbige durch die gehärtete Buchse 44 geschützt sind.

Am Brechelement 38 ist im Bereich des Kragens 42 ein äußeres Innengewinde 46 und am gegenüberliegenden Ende ein inneres Innengewinde 48 vorgesehen, welche zur Montage bzw. Demontage des Brechelementes 38 dienen.

Das Brechelement 38 ist zusammen mit den Buchsen 44 in radialer Richtung angeordnet, um einen einfachen Ein- bzw. Ausbau des Brechelementes 38 zu erreichen, denn bei dieser Anordnung ist es möglich, das Brechelement 38 bei noch montierter Kupplung 18 zu entfernen bzw. einzusetzen.

Dabei ist das innere Innengewinde 48 schlanker ausgeführt, als das äußere Innengewinde 46, damit ein Werkzeug am äußeren Innengewinde 46 vorbei bis zum inneren Innengewinde 48 gelangen kann.

In einer zweiten, hier nicht dargestellten Ausführungsform ist im Gegensatz zu der in den Fig. 4 und 5 dargestellten ersten Ausführungsform nicht der Abtriebsflansch 24 zweigeteilt aufgeführt, sondern der Antriebsflansch 22. Ansonsten ist diese Ausführungsform analog zu der oben beschriebenen ersten Ausführungsform ausgeführt.

In einer dritten, hier ebenfalls nicht dargestellten Ausführungsform, sind über den Außenflansch verteilt zwei Brechelemente 38 vorgesehen, wobei die Kupplung und die Brechelemente ansonsten analog ausgeführt sind. Auch ist es denkbar, mehr als zwei Brechelemente vorzusehen. Aus Gründen der gleichmäßigen Gewichtsverteilung hat es sich als vorteilhaft erwiesen, die Brechelemente äquidistant über den Umfang des Außenflansches zu verteilen.

## Patentansprüche

1. Radachse-Generator-Kupplung eines Schienenfahrzeuges zum Verbinden einer mit einer Radachse (12) des Schienenfahrzeuges (10) wirkverbundenen Kardanwelle (16) mit einer Generatorwelle eines am Schienenfahrzeug (10) gehaltenen Stromgenerators (20), mit einem mit der Kardanwelle (16) verbindbaren Antriebsflansch (22) und mit einem mit der Generatorwelle verbindbaren Abtriebsflansch (24), wobei zwischen dem Antriebsflansch (22) und dem Abtriebsflansch (24) ein gummielastisches Dämpfungselement (26) vorgesehen ist, wobei der Abtriebsflansch (24) einen mit der Generatorwelle verbindbaren Innenflansch (28) und getrennt vom Innenflansch (28) einen am Dämpfungselement (26) angreifenden Außenflansch (30) umfasst, wobei der Innenflansch (28) durch mindestens ein Brechelement (38) mit dem Außenflansch (30), insbesondere formschlüssig, verbunden ist, wobei der mit der Generatorwelle verbindbare Innenflansch (28) gegenüber dem Dämpfungselement (26) und/oder gegenüber dem Antriebsflansch (22) rotierbar gehalten ist, oder
wobei der Antriebsflansch (22) einen mit der Kardanwelle (16) verbindbaren Innenflansch (28) und getrennt vom Innenflansch (28) einen am Dämpfungselement (26) angreifenden Außenflansch (30) umfasst, wobei der Innenflansch (28) durch mindestens ein Brechelement (38) mit dem Außenflansch (30), insbesondere formschlüssig, verbunden ist, wobei der mit der Kardanwelle (16) verbindbare Innenflansch (28) gegenüber dem Dämpfungselement (26) und/oder gegenüber dem Abtriebsflansch (24) rotierbar gehalten ist,
**dadurch gekennzeichnet,**
**dass** das Brechelement (38) radial ausgerichtet ist und dass das Brechelement (38) zur Erhöhung der Scherfestigkeit innen hohl ausgebildet ist.

2. Kupplung nach Anspruch 1,
**dadurch gekennzeichnet,**
**dass** zwischen dem Antriebsflansch (22) und dem Innenflansch (28) oder zwischen dem Abtriebsflansch (24) und dem Innenflansch (28) mindestens ein Wälzlager, insbesondere ein Kugellager (32), vorgesehen ist.

3. Kupplung nach Anspruch 2,
**dadurch gekennzeichnet,**
**dass** das mindestens eine Wälzlager (32) mittels einer Feder, insbesondere einer Tellerfeder (31), vorgespannt ist.

4. Kupplung nach einem der vorangehenden Ansprüche,
**dadurch gekennzeichnet,**
**dass** das mindestens eine Brechelement (38) eine definierte Sollbruchstelle (40) aufweist, wobei die Sollbruchstelle (40) in einem Bereich zwischen dem Innen- (28) und dem Außenflansch (30) angeordnet ist.

5. Kupplung nach einem der vorangehenden Ansprüche,
**dadurch gekennzeichnet,**
**dass** am äußeren Rand des Brechelementes (38) ein Anschlag, vorzugsweise ein umlaufender Kragen (42), ausgebildet ist.

6. Kupplung nach einem der vorangehenden Ansprüche,
**dadurch gekennzeichnet,**
**dass** an dem Brechelement (38) am radial äußeren Ende ein äußeres Innengewinde (46) vorgesehen ist.

7. Kupplung nach einem der vorangehenden Ansprüche
**dadurch gekennzeichnet,**
**dass** im Brechelement (38) am radial inneren Ende ein inneres Innengewinde (48) vorgesehen ist.

8. Kupplung nach wenigstens einem der vorangehenden Ansprüche,
**dadurch gekennzeichnet,**
**dass** das äußere Innengewinde (46) einen größeren Durchmesser aufweist, als das innere Innengewinde (48).

## Claims

1. A wheel axle generator coupling of a rail vehicle for connecting a Cardan shaft (16) operatively connected to a wheel axle (12) of the rail vehicle (10) with a generator shaft of an electric generator (20) supported on the rail vehicle (10), with a drive flange (22) that is connectable to the Cardan shaft (16) and with a driven flange (24) that is connectable to the generator shaft, wherein a rubber-elastic damping element (26) is provided between the drive flange (22) and the driven flange (24), wherein the driven flange (24) includes an inner flange (28) that is connectable with the generator shaft, and an outer flange (30) separate from the inner flange (28) engaging with the damping element (26), wherein the inner flange (28) is connected, in particular in a form-fitting manner, with the outer flange (30) by at least one break-off element (38), wherein the inner flange (28) that is connectable with the generator shaft is supported so that it can rotate relative to the damping element (26) and/or relative to the drive flange (22), or
wherein the drive flange (22) includes an inner flange (28) that is connectable with the Cardan shaft (16) and an outer flange (30) separate from the inner flange (28) engaging with the damping element (26), wherein the inner flange (28) that is connectable with the Cardan shaft (16) is supported so that it can rotate relative to the damping element (26) and/or relative to the driven flange (24), **characterized in that**
the break-off element (38) is radially oriented and that the break-off element (38) is formed so that it is hollow on the inside for increasing the shearing strength.

2. The coupling according to claim 1,
**characterized in that**
at least one rolling bearing, in particular a ball bearing (32) is provided between the drive flange (22) and the inner flange (28) or between the driven flange (24) and the inner flange (28).

3. The coupling according to claim 2,
**characterized in that**
the at least one rolling bearing (32) is pre-tensioned by means of a spring, in particular a plate spring (31).

4. The coupling according to one of the afore-mentioned claims, **characterized in that**
the at least one break-off element (38) comprises a defined predetermined breaking point (40), wherein the predetermined breaking point (40) is disposed in a region between the inner (28) and the outer flange (30).

5. The coupling according to one of the afore-mentioned claims, **characterized in that**
a limit-stop, preferably a circumferential collar (42), is formed on the outer edge of the break-off element (38).

6. The coupling according to one of the afore-mentioned claims, **characterized in that**
an outer internal thread (46) is provided on the break-off element (38) at the radially outer end.

7. The coupling according to one of the afore-mentioned claims, **characterized in that**
an inner internal thread (48) is provided in the break-off element (38) at the radially inner end.

8. The coupling according to one at least one of the afore-mentioned claims,
**characterized in that**
the outer internal thread (46) has a greater diameter than the inner internal thread (48).

## Revendications

1. Accouplement entre un essieu de roue et un générateur d'un véhicule ferroviaire pour relier un arbre à cardan (16) en liaison fonctionnelle avec un essieu de roue (12) du véhicule ferroviaire (10) avec un arbre de générateur d'un générateur de courant (20) maintenu sur le véhicule ferroviaire (10), avec une bride de transmission (22) pouvant être reliée avec l'arbre à cardan (16) et avec une bride de sortie (24) pouvant être reliée avec l'arbre de générateur, où un élément d'amortissement (26) élastique à la manière du caoutchouc est prévu entre la bride de transmission (22) et la bride de sortie (24), où la bride de sortie (24) comprend une bride intérieure (28) pouvant être reliée à l'arbre de générateur et une bride extérieure (30) séparée de la bride intérieure (28) et venant en prise avec l'élément d'amortissement (26), où la bride intérieure (28) est reliée avec la bride extérieure (30), en particulier par liaison de forme, par au moins un élément de rupture (38), où la bride intérieure (28) pouvant être reliée avec l'arbre de générateur est maintenue de manière rotative par rapport à l'élément d'amortissement (26) et/ou par rapport à la bride de transmission (22), ou
où la bride de transmission (22) comprend une bride intérieure (28) pouvant être reliée avec l'arbre à cardan (16) et une bride extérieure (30) séparée de la bride intérieure (28) et venant en prise avec l'élément d'amortissement (26), où la bride intérieure (28) pouvant être reliée avec l'arbre à cardan (16) est maintenue de manière rotative par rapport à l'élément d'amortissement (26) et/ou par rapport à la bride de sortie (24),
**caractérisé en ce que**
l'élément de rupture (38) est orienté radialement et que l'élément de rupture (38) est formé de manière à être creux à l'intérieur pour augmenter la résistance au cisaillement.

2. Accouplement selon la revendication 1,
**caractérisé en ce que**
au moins un roulement, en particulier un roulement à billes (32), est prévu entre la bride de transmission (22) et la bride intérieure (28) ou entre la bride de sortie (24) et la bride intérieure (28).

3. Accouplement selon la revendication 2,
**caractérisé en ce que**
l'au moins un roulement (32) est précontraint au moyen d'un ressort, en particulier d'un ressort à disque (31).

4. Accouplement selon l'une des revendications précédentes,
**caractérisé en ce que**
l'au moins un élément de rupture (38) comporte un point de rupture prédéfini (40), où le point de rupture prédéfini (40) est disposé dans une région entre la bride intérieure (28) et la bride extérieure (30).

5. Accouplement selon l'une des revendications précédentes,
**caractérisé en ce que**
une butée, en particulier une manchette périphérique (42), est formée sur le bord extérieur de l'élément de rupture (38).

6. Accouplement selon l'une des revendications précédentes,
**caractérisé en ce que**
un filetage femelle extérieur (46) est prévu sur l'élément de rupture (38) au niveau de l'extrémité radialement extérieure.

7. Accouplement selon l'une des revendications précédentes,
**caractérisé en ce que**
un filetage femelle intérieur (48) est prévu dans l'élément de rupture (38) au niveau de l'extrémité radialement intérieure.

8. Accouplement selon au moins une des revendications précédentes,
**caractérisé en ce que**
le filetage femelle extérieur (46) présente un plus grand diamètre que le filetage femelle intérieur (48).
